# EUROPÄISCHE PATENTANMELDUNG

(11) **EP 4 765 440 A1**
(43) Veröffentlichungstag der Anmeldung: **24.06.2026**
(21) Anmeldenummer: 25221089.3
(22) Anmeldetag: 05.12.2025
(51) Int. Cl.: H01M 50/51, H01M 50/583

(54) **ELEKTRISCHER ENERGIESPEICHER FÜR EIN KRAFTFAHRZEUG**

(30) Priorität: 17.12.2024 DE 102024138344
(71) Anmelder: MAN Truck & Bus SE, 80995 München (DE)
(72) Erfinder: Kratzer, Sebastian, 80995 München (DE)

(57) **Zusammenfassung**

Die Erfindung betrifft einen elektrischen Energiespeicher für ein Kraftfahrzeug und ein Kraftfahrzeug mit einem elektrischen Energiespeicher. Der elektrische Energiespeicher umfasst mindestens ein Batteriemodul (12), das mehrere in Reihe geschaltete Speicherzellen (14) umfasst, wobei in die Speicherzellen (14) jeweils eine Speicherzellen-Sicherung (16) integriert ist. Der Energiespeicher (10) umfasst ferner mindestens eine Lichtbogen-Sicherung (18) zur Reduzierung einer Lichtbogenbildung innerhalb des mindestens einen Batteriemoduls (12) beim thermischen Durchgehen einer Speicherzelle (14) und eine Energiespeicher-Sicherung (20) zum Schutz des Energiespeichers (10) vor fahrzeugseitigen Kurzschlüssen. Bevorzugt weist die Lichtbogen-Sicherung (18) bei einer gegebenen Stromhöhe eine Auslösezeit auf, die schneller ist als die Auslösezeit der Speicherzellen-Sicherung (16) und die langsamer ist als die Auslösezeit der Energiespeicher-Sicherung (20). Vorteilhaft kann dadurch besonders wirksam das Entstehen von Lichtbögen beim thermischen Durchgehen einer Zelle reduziert werden und der Energiespeicher insgesamt im Falle von Kurzschlüssen gesichert werden.

## Beschreibung

Die Erfindung betrifft einen elektrischen Energiespeicher für ein Kraftfahrzeug und ein Kraftfahrzeug mit einem elektrischen Energiespeicher.

Bei aus der Praxis bekannten Fahrzeugbatterien, insbesondere Li-lonen-Fahrzeugbatterien, wie sie z. B. als Energiespeicher bzw. als Traktionsbatterie in Hybridfahrzeugen oder Elektrofahrzeugen zum Einsatz kommen, kann es z. B. aufgrund eines thermischen Durchgehens (engl. "thermal runaway", worunter eine Überhitzung einer Speicherzelle aufgrund eines sich selbst verstärkenden, Wärme produzierenden Prozesses zu verstehen ist) und/oder aufgrund einer Beschädigung der Fahrzeugbatterie zu einem Entgasen (engl. "venting") der Fahrzeugbatterie kommen. Die Entgasungsemission selbst und/oder in der Entgasungsemission enthalten Partikel können Temperaturen von bis zu 800-1000°C erreichen. Daher können die Entgasungsemission selbst und/oder in der Entgasungsemission enthaltene Partikel zu einem Aufheizen von Nachbarzellen bis zur Schädigung derselben führen.

Der beim Entgasen aus der Speicherzelle austretende heiße Gas- bzw. Partikelvolumenstrom kann bestehende Hochvolt, HV-, Isolationen von z. B. Busbars abisolieren, z. B. aufgrund der Hitze oder durch Abrasion. Dies kann zum elektrischen Durchbruch bzw. zu Lichtbögen führen. Passiert ein Lichtbogen an anderer Stelle im Batteriesystem können dort lokal neue Zellen thermisch Durchgehen. Wenn dieser Thermal Runaway nicht kontrolliert wird, kann es zu einer Kettenreaktion kommen, wobei es z. B. zu einem thermischen Durchgehen weiterer Speicherzellen kommt (engl. "thermal propagation"). In diesem Fall besteht die Gefahr eines Batteriebrandes.

Um z. B. das Auftreten von elektrischen Durchbrüchen durch den abrasiven Gasstrahl zu verhindern, wäre es möglich, die Zellen, die Zellmodule und die elektrische Verbindungstechnik durch temperaturbeständige Materialien zu schützen und einzupacken oder entsprechende Entgasungskanäle für die Entgasungsemission in den Energiespeicher zu integrieren, um die Ausbereitung von Lichtbögen und das Anzünden weiterer Speicherzellen zu verhindern. Derartige Lösungen sind jedoch sehr kostenaufwändig.

Die Aufgabe der vorliegenden Erfindung ist es, einen verbesserten elektrischen Energiespeicher für ein Kraftfahrzeug bereitzustellen, der es ermöglicht, die Gefahr eines Batteriebrandes im Falle eines thermischen Durchgehens einer Batteriezelle zu reduzieren.

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft einen elektrischen Energiespeicher (z. B. Traktionsbatterie) für ein elektrisch antreibbares Kraftfahrzeug. Der elektrische Energiespeicher weist mindestens ein Batteriemodul, vorzugsweise Batteriezellstapelmodul auf. Das Batteriemodul umfasst mehrere in Reihe geschaltete Speicherzellen. In jeder Speicherzelle ist jeweils eine Sicherung integriert. Zu besseren Unterscheidung von nachfolgend noch beschriebenen weiteren Sicherungen des Energiespeichers wird diese Sicherung nachfolgend als Speicherzellen-Sicherung (oder erste Sicherung) bezeichnet. Das Vorsehen solcher Speicherzellen-Sicherungen ist an sich bekannt. Die Speicherzellen-Sicherung dient zum Schutz der Speicherzellen vor zu hohen Strömen.

Der elektrische Energiespeicher umfasst ferner mindestens eine weitere Sicherung zur Reduzierung einer Lichtbogenbildung innerhalb des mindestens einen Batteriemoduls beim thermischen Durchgehen einer Speicherzelle. Diese Sicherung wird zur besseren Unterscheidung nachfolgend als Lichtbogen-Sicherung (oder zweite Sicherung) bezeichnet.

Die Lichtbogen-Sicherung ist bevorzugt dazu ausgebildet, bei Auftreten einer aus einer thermisch durchgehenden Speicherzelle austretenden Entgasungs-Emission eine durch die Reihenschaltung der Speicherzellen erzeugte elektrischen Systemspannung zu reduzieren, vorzugsweise durch Trennen einer elektrischen Verbindung zwischen zwei benachbarten Speicherzellen. Anders ausgedrückt ist die Lichtbogen-Sicherung bevorzugt so ausgelegt, dass sie bei den (hohen) Stromstärken, die in Folge einer Entgasungsemission auftreten, innerhalb einer festgelegten Mindestzeit anspricht, wodurch die elektrische Reihenschaltung der Speicherzellen an einer Stelle unterbrochen wird. Die resultierende Verringerung der Systemspannung im Batteriemodul führt zu einer Verringerung der Lichtbogenneigung. Die Lichtbogen-Sicherung kann im Batteriemodul zwischen zwei benachbarten Speicherzellen angeordnet sein. Die Lichtbogen-Sicherung kann daher auch als Modulsicherung bezeichnet werden. Es können mehrere Modulsicherungen vorgehen sein. Es ist jedoch auch möglich, dass die Lichtbogen-Sicherung in der Schützbox (engl. battery junction box) des Energiespeichers und damit räumlich außerhalt des Batteriemoduls angeordnet (jedoch dem Batteriemodul funktional zugeordnet) ist, was nachfolgend noch näher beschrieben wird.

Der elektrische Energiespeicher umfasst ferner mindestens eine weitere Sicherung zum Schutz des Energiespeichers vor fahrzeugseitigen Kurzschlüssen. Diese Sicherung wird zur besseren Unterscheidung nachfolgend als Energiespeicher-Sicherung (oder dritte Sicherung) bezeichnet. Die Energiespeicher-Sicherung ist vorzugsweise in einer Schützbox des Energiespeichers angeordnet.

Vorteilhaft ist ein Sicherungskonzept vorgesehen, dass den Energiespeicher umfassend auf verschiedenen Ebenen vor Kurzschlüssen schützt.

Eine besonders bevorzugte Ausführungsform sieht vor, dass die Lichtbogen-Sicherung bei einer gegebenen Stromhöhe eine Auslösezeit aufweist, die schneller ist als die Auslösezeit der Speicherzellen-Sicherung und die langsamer ist als die Auslösezeit der Energiespeicher-Sicherung. Vorteilhaft kann dadurch besonders wirksam das Entstehen von Lichtbögen beim thermischen Durchgehen einer Zelle reduziert werden. Das Ausbreiten eines thermischen Durchgehens auf andere Zellen wird zuverlässiger verhindert und die Sicherheit des Energiespeichers bzw. Batteriesystems erhöht. Die Energiespeicher-Sicherung löst zuerst aus, um das Batteriemodul und die Speicherzellen zu schützen, weil dies in der Regel die teuersten Komponenten sind. Die Energiespeicher-Sicherung würde jedoch bei batterieinternen Kurschlüssen, wie z.B. im Falle einer Entgasungsemission, umgangen werden, weswegen hierfür die Lichtbogen-Sicherung vorgesehen ist, die schneller als die Speicherzellen-Sicherung anspricht, weil die Lichtbögen in der Regel sehr schnell entstehen können.

In einer bevorzugten Ausführungsform liegt bei einer Stromhöhe im Bereich von 1.200A bis 16.000A die Auslösezeit der Lichtbogen-Sicherung im Bereich von 0,005 bis 0,5 Sekunden. Diese Bereiche für das Auslöseverhalten der Lichtbogen-Sicherung haben sich als besonders wirksam herausgestellt, um das Auftreten von Lichtbögen bzw. das Risiko einer thermischen Kettenreaktion zu reduzieren. In einer weiteren Ausführungsform ist die Auslösezeit der Lichtbogen-Sicherung bei einer Stromhöhe von 10000A kleiner als 0,02 Sekunden, weiter vorzugsweise kleiner ist als 0,01 Sekunden. Diese schnelle Auslösezeit ist besonders vorteilhaft, um das Auftreten von Lichtbögen bzw. das Risiko einer thermischen Kettenreaktion zu reduzieren.

Beispielsweise kann eine Auslösekennlinie der Lichtbogen-Sicherung derart festgelegt sein, dass Lichtbögen, die beim thermischen Durchgehen einer Speicherzelle auftreten, schneller getrennt werden, als die im Energiespeicher verbleibenden Speicherzellen thermisch durchgehen. Die Ausbreitung von sog. Thermal Runaways wird verhindert und die Sicherheit von Batteriesystemen erhöht.

In einer weiteren Ausführungsform umfasst der Energiespeicher mehrere Batteriemodule, die vorzugsweise in Reihe geschaltet sind. Hierbei kann jedes der Batteriemodule mindestens eine Lichtbogen-Sicherung aufweisen. Die Lichtbogen-Sicherung kann hierbei zwischen zwei benachbarten Speicherzellen des Batteriemoduls angeordnet sein oder auch am Anfang oder Ende des Batteriemoduls angeordnet sein. Alternativ kann nur ein Teil der Batteriemodule eine Lichtbogen-Sicherung aufweisen.

Wie viele Lichtbogen-Sicherungen vorgesehen sind, kann z. B. von dem Spannungsniveau der Batteriemodule abhängen. Lichtbögen entstehen z. B. ab einer Spannung von ca. 100 V. Weist jedes Batteriemodul z. B. eine Spannung von 40 V auf, ist es ausreichend, nur jedes zweite Batteriemodul von in Reihe geschalteten Batteriemodulen mit einer Lichtbogen-Sicherung abzusichern. Teilt man die Reihenschaltung beispielsweise in der Mitte durch, so entstehen zwei Teilstränge, an deren Enden lediglich nur noch die halbe Spannung abgreifbar ist. Durch ein Auftrennen einer Reihenschaltung der oben genannten Batteriemodule mittels der Lichtbogen-Sicherung lässt es sich also vorteilhafterweise erreichen, die maximale, durch den Energiespeicher bereitstellbare und zwischen zwei Punkten abgreifbare Spannung durch Trennen der elektrischen Verbindungen zwischen den Batteriemodulen oder Batteriemodulgruppen zu reduzieren. Entsprechend reduziert sich auch die Wahrscheinlichkeit für eine Lichtbogenbildung, da hierdurch die maximal möglichen Potentialdifferenzen des Energiespeichers reduziert werden.

Gemäß einer Ausführungsform ist die die Lichtbogen-Sicherung eine Schmelzsicherung. Dies ermöglicht eine besonders kosteneffiziente Ausführung der Schmelzsicherung. Alternativ kann die Lichtbogen-Sicherung als eine Halbleiterschalter-Sicherung (engl. solid state switch-Sicherung) ausgeführt sein.

In einer weiteren Ausführungsform ist die Lichtbogen-Sicherung als Zellverbinder zum elektrischen Verbinden zweier benachbarter Speicherzellen ausgebildet, der eine Sollbruchstelle aufweist. Im Fall der Schmelzsicherung ist die Sollbruchstelle eine Sollschmelzstelle. Vorteilhaft kann eine besonders kosteneffiziente Bereitstellung der Lichtbogen-Sicherung realisiert werden, da diese in ein sowie vorhandenes Bauteil, hier der Zellverbinder, integriert ist.

Beispielsweise kann der als Schmelzsicherung dienende Zellverbinder U-förmig ausgebildet sein, aufweisend zwei Schenkel, die jeweils an unterschiedlichen Speicherzellen befestigt sind, und die über mehrere, vorzugsweise drei, die Sollbruchstelle ausbildende Stege verbunden sind. Die Stege dienen hierbei als Sollschmelzstellen, die bei Überschreiten einer vorbestimmten Stromhöhe in einer vorbestimmten Zeit durchschmelzen. Die Stege sind hierzu zweckmäßig entsprechend schmal ausgeführt.

Gemäß einer weiteren Ausführungsform umfasst der Energiespeicher ferner eine Schützbox (engl. battery junction box). Die Schützbox weist mindestens ein Trennelement, z. B. mindestens ein Schütz, und die Energiespeicher-Sicherung auf, um den spannungsführenden Teil des Energiespeichers vom Hochvolt-Bordnetz des Kraftfahrzeugs wahlweise zu trennen. Die Schützbox kann ferner einen Hochvolt-Verteiler und/oder den Batterie-Management-Controller, BMB (engl. Battery Management Controller) aufweisen. Die Schützbox kann in das Gehäuse des Energiespeichers integriert sein oder ein separates Gehäuse aufweisen, das am Gehäuse des Energiespeichers, welches das mindeste eine Batteriemodul umgibt, angeordnet ist.

In einer Weiterbildung dieser Ausführungsform umfasst das mindestens eine Batteriemodul mehrere Batteriemodule, die in mehreren übereinander angeordneten Lagen des Energiespeichers angeordnet sind, d. h. jede Lage des Energiespeichers umfasst ein oder mehrere der Batteriemodule. Pro Lage kann eine Lichtbogen-Sicherung vorgesehen sein, die in der Schützbox angeordnet ist. Anders ausgedrückt wird jede Lage des Energiespeichers durch eine eigene Lichtbogen-Sicherung abgesichert, die im Auslösefall die Lage von den anderen Lagen elektrisch trennt. Die Lichtbogen-Sicherung ist jedoch räumlich getrennt von der Lage in der Schützbox angeordnet. Vorteilhaft kann für unterschiedliche Bestückungen des Energiespeichers (d.h. je nach Anzahl der Batteriemodule und je nach Spannungsniveau der Speicherzellen) schnell räumlich getrennt hiervon die geeignete Ausführung und Anzahl an Lichtbogen-Sicherungen angeordnet werden. Bei der Ausführungsform kann z. B. die Lichtbogen-Sicherung als MOSFET-Sicherung ausgebildet sein. Eine Ausbildung als Schmelzsicherung ist jedoch auch möglich. Alternativ zur Anordnung in der Schützbox ist es möglich, dass mindestens ein Batteriemodul pro Lage die Lichtbogen-Sicherungen aufweist.

Die vorliegende Offenbarung umfasst ferner die folgenden Aspekte. Die Energiespeicher-Sicherung kann dazu ausgebildet sein, eine elektrische Verbindung zwischen dem Energiespeicher und dem Kraftfahrzeug im Kurzschlussfall, vorzugsweise bei einem fahrzeugseitigen Kurzschlussfall, zu trennen. Die Energiespeicher-Sicherung kann als kombinierte Schalt- und Schutzvorrichtung ausgebildet sein. Die kombinierte Schalt- und Schutzvorrichtung umfasst hierbei eine Kontaktpaarung mit einer Doppelkontaktstelle, bei der zwei Festkontaktstücke mittels einer beweglichen Kontaktbrücke elektrisch leitend verbindbar und wieder trennbar sind; und einen ansteuerbaren elektromechanischen Antrieb, mittels dessen eine Steuerkraft auf die Kontaktbrücke erzeugbar ist, zum wahlweisen Schließen und Öffnen der elektrisch leitenden Verbindung. Vorteilhaft ist die Schalt- und Schutzvorrichtung reversibel betreibbar, z. B. im Unterschied zu einer Schmelzsicherung, die ausgetauscht werden muss, nachdem sie ausgelöst hat.

Für eine beispielhafte Ausführung der Energiespeicher-Sicherung als eine solche kombinierte Schalt- und Schutzvorrichtung wird auf die Offenlegungsschrift DE 10 2021 123 969 A1 verwiesen, deren diesbzgl. Aspekte betreffend die kombinierte Schalt- und Schutzvorrichtung hiermit unter Bezugnahme auf diese Offenlegungsschriften in diese Offenbarung mitaufgenommen werden. Eine derartige Ausführung der Energiespeicher-Sicherung kann auch als Levitier-Schütze bezeichnet werden.

Die in die Speicherzellen integrierte Speicherzellen-Sicherung kann z. B. nach den Polen im Innern der Speicherzelle angeordnet sein, ausgeführt als Verjüngung einer Stromschiene. Die Verjüngung ist so ausgelegt, dass bei Überschreiten einer vorbestimmten Stromgrenze die Verjüngung schmilzt. Diese Sollbruchstelle schützt daher die Speicherzelle bei Auftreten von zu hohen Strömen.

Ein weiterer Aspekt der vorliegenden Offenbarung betrifft ein Kraftfahrzeug, vorzugsweise Nutzfahrzeug (z. B. Lastkraftwagen oder Omnibus), aufweisend einen elektrischen Energiespeicher wie hierin offenbart. Hierbei kann unter einem Nutzfahrzeug im Allgemeinen ein Fahrzeug verstanden werden, das durch seine Bauart und Einrichtung speziell zur Beförderung von Personen, zum Transport von Gütern oder zum Ziehen von Anhängerfahrzeugen ausgelegt ist. Optional kann das Kraftfahrzeug ferner einen Fahrzeugrahmen, vorzugsweise Leiterrahmen, aufweisen, an dem der elektrische Energiespeicher angebracht ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht eines Energiespeichers gemäß einem Ausführungsbeispiel;
- Figur 2: Strom-Zeit-Kennlinien der Energiespeicher-Sicherung, der Lichtbogen-Sicherung und der Speicherzellen-Sicherung gemäß einem Ausführungsbeispiel;
- Figur 3: eine Temperaturverteilung der Oberfläche des Energiespeichers in einer schematischen Perspektivansicht sowie eine Detaildarstellung der Lichtbogen-Sicherung gemäß einem Ausführungsbeispiel;
- Figur 4: eine schematische Ansicht eines mehrlagigen Energiespeichers gemäß einem weiteren Ausführungsbeispiel; und
- Figur 5: ein Kraftfahrzeug mit einem Energiespeicher gemäß einem Ausführungsbeispiel.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

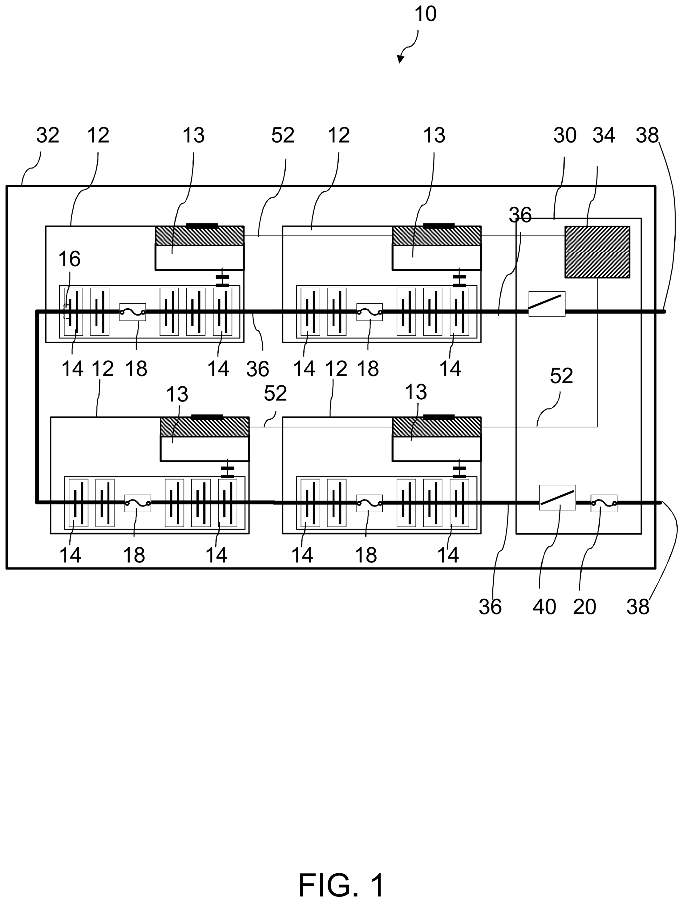

Die Figur 1 zeigt einen elektrischen Energiespeicher 10 (z. B. Traktionsbatterie) für ein elektrisch antreibbares Kraftfahrzeug. Der elektrische Energiespeicher 10 weist mehrere Batteriemodule (nachfolgend auch kurz als Modul bezeichnet) 12 auf. Lediglich beispielhaft sind in Figur 1 vier Batteriemodule 12 dargestellt. Die Batteriemodule 12 sind bevorzugt elektrisch in Reihe geschaltet und über die Stromleitung 52 verbunden. Jedes der Batteriemodule 12 weist mehrere in Reihe geschaltete Speicherzellen 14 (auch als Batteriezellen oder kurz Zellen bezeichnet) auf, z. B. n Speicherzellen. Die Anzahl n kann wiederum beliebig festgelegt sein. Zu Verbesserung der Darstellung sind in Figur 1 nur jeweils 5 solcher Speicherzellen 14 pro Modul 12 gezeigt. Die Speicherzellen, z. B. prismatische Zellen, Pouch-Zellen oder Rundzellen, sind stapelartig nebeneinander und/oder übereinander angeordnet. Die Batteriemodule 12 können entsprechend Batteriezellstapelmodule sein.

Zur Verbesserung der Übersichtlichkeit sind nur ein Teil der Zellen 14 und Module 12 mit Bezugszeichen gekennzeichnet. Jedes Modul verfügt ferner über einen Zellmanagement-Controller 13 (engl. cell management controller, CMC) Der Zellmanagement-Controller 13 überwacht und steuert die einzelnen Zellen eines Energiespeichers, um deren sicheren und effizienten Betrieb zu gewährleisten. Es sorgt für die Ausbalancierung der Zellspannungen, überwacht die Temperaturen und erkennt mögliche Fehler oder Anomalien, um die Lebensdauer und Leistung des Energiespeichers 10 zu optimieren.

Der Energiespeicher 10 umfasst ferner eine Schützbox 30. Die Schützbox 30 verteilt die elektrische Energie von den Batteriemodulen 12 zu den verschiedenen Systemen und Komponenten des Fahrzeugs und schützt dabei die elektrischen Systeme durch eine Sicherung 20 (Energiespeicher-Sicherung 20) und Schutzschalter bzw. Schütze 40 vor Überstrom und Kurzschlüssen. Zudem sorgt die Schützbox für die sichere Verbindung und Isolierung der Hochspannungskomponenten, um die Sicherheit und Effizienz des Fahrzeugs zu gewährleisten.

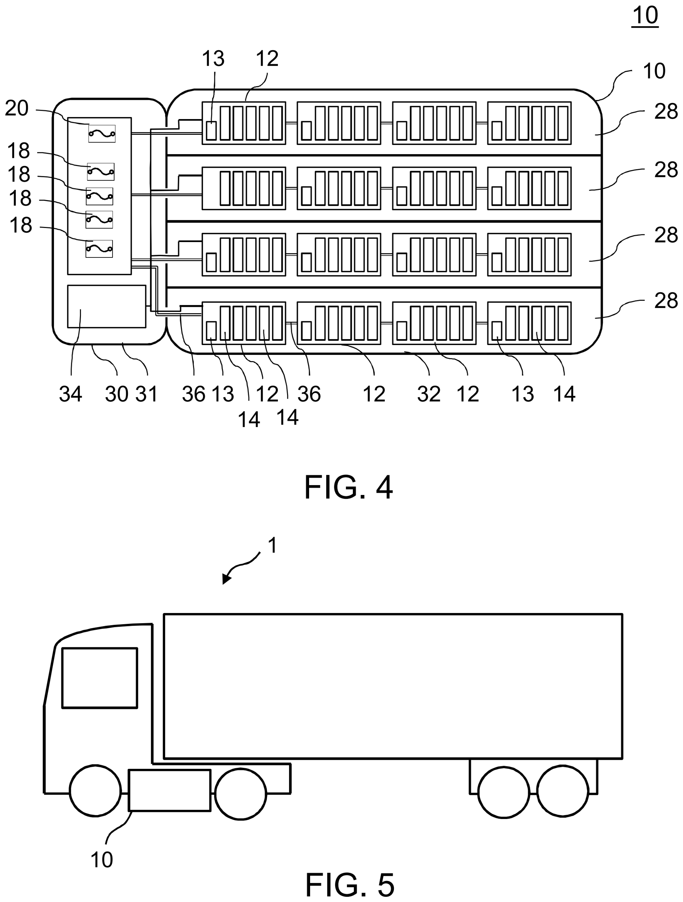

Die Schützbox 30 umfasst ferner einen Batterie-Management-Controller, BMC 34. Der BMC 34 überwacht und steuert die Zellspannungen, Ströme und Temperaturen des Energiespeichers 10, um einen sicheren Betrieb zu gewährleisten und die Lebensdauer des Energiespeichers 10 zu optimieren. Der BMC 34 steht über die die Signalleitung 52 in Kommunikationsverbindung mit den CMCs 13, schützt das Batteriepaket vor Fehlfunktionen wie Überladung, Überhitzung und Kurzschlüssen und kommuniziert gleichzeitig wichtige Statusinformationen an andere Fahrzeugsysteme und den Fahrer. Ferner weist der Energiespeicher 10 fahrzeugseitige Anschlüsse 38 für das HV-Bordnetz auf. Die Module 12 und die Schützbox 30 werden von einem Gehäuse 32 des Energiespeichers 10 umhaust. Alternativ kann die Schützbox 30 ein eigenes Gehäuse aufweisen und außenseitig am Gehäuse 32 befestigt sein (vgl. z. B. Fig. 4).

Zur Absicherung vor Kurzschlüssen, insbesondere auch vor Lichtbogen-ausgelösten Kurschlüssen infolge eines thermischen Durchgehens einer der Speicherzellen 14, ist der Energiespeicher 10 durch ein mehrstufiges Sicherungskonzept geschützt.

So ist in jede Speicherzelle 14 eine Sicherung (Speicherzellen-Sicherung) 16 integriert, was in Figur 1 nur stark schematisiert beispielhaft für eine der Speicherzellen 14 dargestellt ist. Das Vorsehen solcher Speicherzellen-Sicherungen 16 ist an sich bekannt. Die Speicherzellen-Sicherung 16 dient zum Schutz der Speicherzellen vor zu hohen Strömen. Die in die Speicherzellen 14 integrierte Speicherzellen-Sicherung 16 kann z. B. nach den Polen im Innern der Speicherzelle angeordnet sein, ausgeführt als Verjüngung einer Stromschiene. Die Verjüngung ist so ausgelegt, dass bei Überschreiten einer vorbestimmten Stromgrenze die Verjüngung schmilzt. Diese Sollbruchstelle schützt daher die Speicherzelle 14 bei Auftreten von zu hohen Strömen.

Der elektrische Energiespeicher 10 umfasst ferner eine an sich bekannte weitere Sicherung (Energiespeicher-Sicherung) 20, die zusammen mit den Schützen 40 in der Schützbox 30 angeordnet ist, wie vorstehend beschrieben wurde. Die Energiespeicher-Sicherung 20 ist dazu ausgebildet, eine elektrische Verbindung zwischen dem Energiespeicher 10 und dem Kraftfahrzeug im Kurzschlussfall, vorzugsweise bei einem fahrzeugseitigen Kurzschlussfall, zu trennen.

Der elektrische Energiespeicher 10 umfasst ferner mindestens eine weitere Sicherung (Lichtbogen-Sicherung) 18 zur Reduzierung einer Lichtbogenbildung innerhalb des mindestens einen Batteriemoduls beim thermischen Durchgehen einer Speicherzelle.

Die Lichtbogen-Sicherung 18 ist dazu ausgebildet, bei Auftreten einer aus einer thermisch durchgehenden Speicherzelle 14 austretenden Entgasungs-Emission eine durch die Reihenschaltung der Speicherzellen 14 erzeugte elektrischen Systemspannung zu reduzieren. Beispielsweise kann die Lichtbogen-Sicherung 18 eine Schmelzsicherung sein, die beim Auslösen schmilzt und die elektrische Verbindung zwischen zwei benachbarten Speicherzellen 14 elektrisch trennt.

In Figur 1 ist die Lichtbogen-Sicherung 18 lediglich beispielhaft zwischen der 2. und 3. Speicherzelle 14 der Batteriemodule 12 angeordnet. Je nach Ausführungsform des Energiespeichers können unterschiedliche Anzahlen der Lichtbogen-Sicherung 18 pro Modul 12 (z. B. eine Lichtbogen-Sicherung pro Modul, zwei oder mehrere) und unterschiedliche Anordnungspositionen (z. B. an Anfang, Ende oder mittig der Reihenschaltung der Speicherzellen 14) gewählt werden.

Wie viele Lichtbogen-Sicherungen 18 vorgesehen sind, kann z. B. von dem Spannungsniveau der Speicherzellen 14 abhängen. Lichtbögen entstehen z. B. ab einer Spannung von ca. 100 V. Weist jede Speicherzelle 14 z. B. eine Spannung von 40 V auf, ist es ausreichend, nur jede zweite Speicherzelle 14 von in Reihe geschalteten Batteriemodulen 12 mit einer Lichtbogen-Sicherung 18 abzusichern. Teilt man die Reihenschaltung beispielsweise in der Mitte durch, so entstehen zwei Teilstränge, an deren Enden lediglich nur noch die halbe Spannung abgreifbar ist. Durch ein Auftrennen einer Reihenschaltung der oben genannten Speicherzellen 14 mittels der Lichtbogen-Sicherung 18 lässt es sich also vorteilhafterweise erreichen, die maximale, durch den Energiespeicher 10 bereitstellbare und zwischen zwei Punkten abgreifbare Spannung durch Trennen der elektrischen Verbindungen zwischen den Speicherzellen 14 und/oder Batteriemodulen 12 oder Batteriemodulgruppen zu reduzieren auf ein Spannungsniveau, das unterhalb der Spannung von z. B. ca. 100 V liegt, ab der Lichtbögen entstehen. Entsprechend reduziert sich auch die Wahrscheinlichkeit für eine Lichtbogenbildung, da hierdurch die maximal möglichen Potentialdifferenzen des Energiespeichers 10 reduziert werden.

Die drei Sicherungsebenen, umfassend die Energiespeicher-Sicherung 20, Lichtbogen-Sicherungen 18 und die Speicherzellen-Sicherungen 16, sichern somit mehrstufig bzw. zwiebelschalenartig den Energiespeicher 10 umfassend von außen nach innen ab. Wenn z. B. ein fahrzeugseitiger Kurzschluss auftritt, soll zuerst die Energiespeicher-Sicherung 20 auslösen, um die Module 12 und die Zellen 14 zu schützen. Eine Besonderheit hier ist vorliegend, dass die Lichtbogen-Sicherungen 18 speziell ausgelegt sind, um den Energiespeicher 10 gegen Lichtbögen abzusichern, falls eine Zelle 14 thermisch durchgeht.

Hierzu ist vorgesehen, dass die Lichtbogen-Sicherung 18 bei einer gegebenen Stromhöhe eine Auslösezeit aufweist, die schneller ist als die Auslösezeit der Speicherzellen-Sicherung 16 und die langsamer ist als die Auslösezeit der Energiespeicher-Sicherung 20.

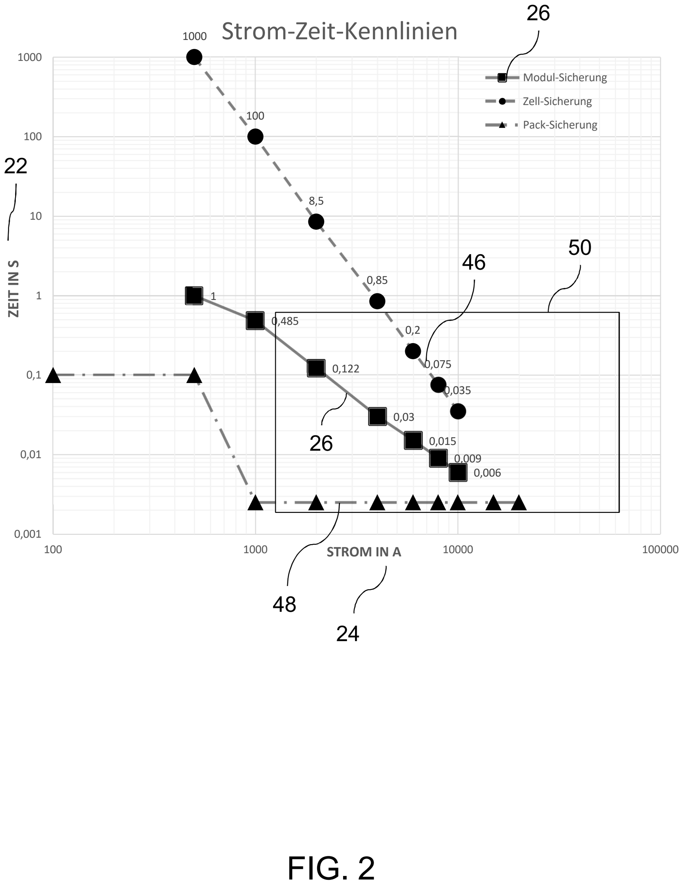

Dies ist in Figur 2 illustriert. Figur 2 zeigt Strom-Zeit-Kennlinien der Energiespeicher-Sicherung 20, der Lichtbogen-Sicherung 18 und der Speicherzellen-Sicherung 16 gemäß einem Ausführungsbeispiel. Die Strom-Zeit-Kennlinie der Lichtbogen-Sicherung (Modul-Sicherung) 18 ist mit den Bezugszeichen 26 gekennzeichnet; die Kennlinien der Speicherzellen-Sicherung 16 bzw. der Energiespeicher-Sicherung 20 mit den Bezugszeichen 46 bzw. 48.

Das Diagramm bzw. die Kennlinien geben an, bei welcher Stromhöhe, der die jeweilige Sicherung ausgesetzt ist, sich welche Auslösezeit der Sicherung ergibt. Der mit den rechteckigen Rahmen 50 gekennzeichnete Bereich gibt einen typischen Lichtbogenbereich an, d. h. die Stromstärken, die im Innern des Energiespeichers 10 in Folge eines thermischen Durchgehens einer Speicherzelle und der resultierenden Entgasungsemission entstehen und die zum Entstehen von Lichtbögen führen können.

Beispielhaft sind die Lichtbogen-Sicherungen 18 so ausgelegt, dass bei einer Stromhöhe im Bereich von 1.200A bis 16.000A die Auslösezeit der Lichtbogen-Sicherung im Bereich von 0,005 bis 0,5 Sekunden liegt. Wie die Kennlinie 26 angibt, ist die Auslösezeit der Lichtbogen-Sicherung 18 bei einer Stromhöhe von 10000A kleiner als 0,02 Sekunden, weiter vorzugsweise kleiner ist als 0,01 Sekunden. Hier ist der Wert beispielhaft 0,009 Sekunden.

Da Lichtbögen in Reaktion auf ein thermisches Durchgehen sehr schnell entstehen, haben sich diese kurzen Zeitbereiche für das Auslöseverhalten der Lichtbogen-Sicherung 18 als besonders wirksam herausgestellt, um das Auftreten von Lichtbögen bzw. das Risiko einer thermischen Kettenreaktion zu reduzieren. Anders ausgedrückt ist die Lichtbogen-Sicherung 18 bevorzugt so ausgelegt, dass sie bei den (hohen) Stromstärken, die in Folge einer Entgasungsemission auftreten, innerhalb einer festgelegten Mindestzeit anspricht, wodurch die elektrische Reihenschaltung der Speicherzellen an der Stelle der Lichtbogen-Sicherung 18 unterbrochen wird. Die resultierende Verringerung der Systemspannung im Batteriemodul führt dann zu einer Verringerung der Lichtbogenneigung.

Figur 2 zeigt ferner, dass die Lichtbogen-Sicherung 18 bei einer gegebenen Stromhöhe eine Auslösezeit aufweist, die schneller ist als die Auslösezeit der Speicherzellen-Sicherung 16 und die langsamer ist als die Auslösezeit der Energiespeicher-Sicherung 20. Die Lichtbogen-Sicherung 18 löst also schneller aus als die Speicherzellen-Sicherung 16. Zwar ist die Auslösezeit der Energiespeicher-Sicherung 20 noch schneller. Bei einem Entgasungs-Event handelt es sich jedoch um eine Art batterieinternen Kurzschluss, bei dem die Energiespeichersicherung 20 umgangen wird bzw. nicht anschlägt. Deswegen ist ein schnelles Auslösen der Lichtbogen-Sicherung 18, wie hier beschrieben wichtig, um das Entstehen von Lichtbögen schnell zu verhindern oder zumindest zu reduzieren, und so das Ausbreiten eines thermischen Durchgehens auf andere Zellen zuverlässiger zu verhindern. Die Sicherheit des Energiespeichers 10 bzw. Batteriesystems wird dadurch erhöht, ohne dass kostenaufwändige Entgasungskanäle oder hochtemperaturbeständige Materialen zum Schutz der Verbindungstechnik und Speicherzellen vonnöten wären.

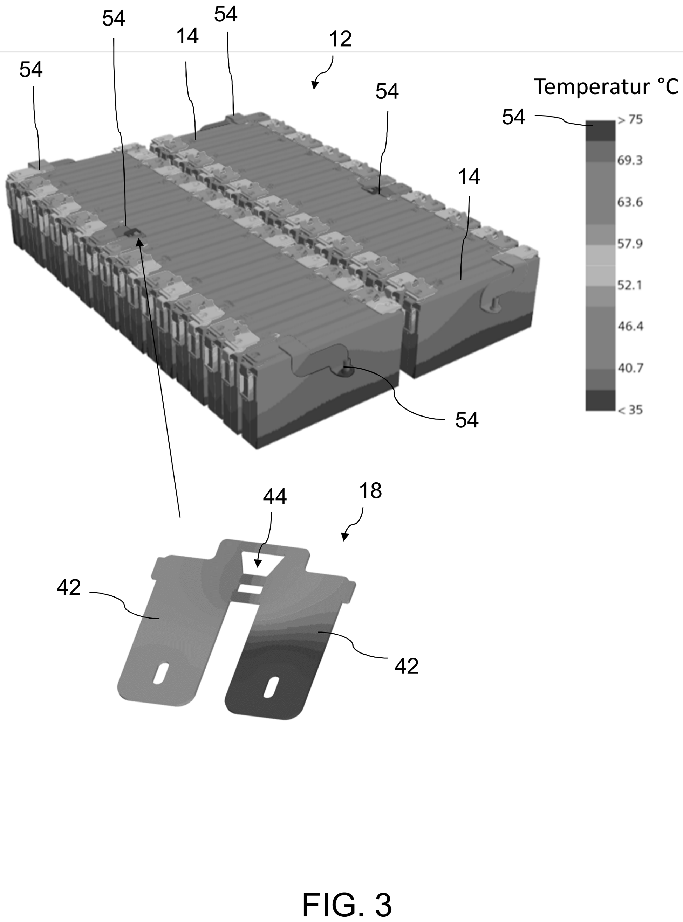

Figur 3 zeigt eine Temperaturverteilung der Oberfläche eines Batteriezellstapelmoduls 12 des Energiespeichers 10 in einer schematischen Perspektivansicht. Das Batteriezellstapelmodul 12 umfasst zwei Batteriezellstapel. Rechts ist die Temperaturskala für die durch die Grauschattierung gekennzeichnete Wärmeverteilung gezeigt. Die Bereiche mit der höchsten Temperatur (> 75°C) aus einer beispielhaften Messung sind zur Hervorhebung zusätzlich mit dem Bezugszeichen 54 gekennzeichnet. Die Bereiche 54 stellen Wärme-Hotspots (Hitze-Zentren) dar. Betroffen sind insbesondere Zellverbinder, die benachbarte Speicherzellen 14 verbinden bzw. Stellen, an denen z. B. der beim Entgasen aus der Speicherzelle austretende heiße Gas- bzw. Partikelvolumenstrom bestehende Hochvolt, HV-, Isolationen von z. B. den Zellverbindern abisoliert hat (z. B. aufgrund der Hitze oder durch Abrasion).

Ein Teil der Zellverbinder kann z. B. als Lichtbogen-Sicherung ausgeführt sein. Eine beispielhafte Ausführung der Lichtbogen-Sicherung 18 als Zellverbinder und Schmelzsicherung zeigt Figur 3 unten in einer vergrößerten Darstellung der Lichtbogen-Sicherung 18. Der als Schmelzsicherung 18 dienende Zellverbinder ist U-förmig ausgebildet, aufweisend zwei Schenkel 42, die jeweils an unterschiedlichen benachbarten Speicherzellen 14 befestigt sind, und die über mehrere, vorzugsweise drei, die Sollbruchstelle 44 ausbildende Stege verbunden sind. Die Stege dienen hierbei als Sollschmelzstellen 44, die bei Überschreiten einer vorbestimmten Stromhöhe in einer vorbestimmten Zeit gemäß der Kennlinie 26 durchschmelzen. Die Stege sind hierzu zweckmäßig entsprechend schmal ausgeführt.

Figur 4 zeigt eine schematische Ansicht eines Energiespeichers gemäß einem weiteren Ausführungsbeispiel, bei dem der Energiespeicher 10 mehrlagig ausgeführt ist. Hierbei sind mehrere, übereinander angeordnete Lagen 28 des Energiespeichers 10 vorgesehen. Jede Lage 28 weist mehrere Batteriemodule 12 mit mehreren Zellen 14 auf. Lediglich beispielhaft sind in Figur 4 vier Batteriemodule 12 pro Lage 28 dargestellt. Pro Lage 28 kann eine Lichtbogen-Sicherung 18 vorgesehen sein, die in der Schützbox 30 angeordnet ist. Anders ausgedrückt wird jede Lage 28 des Energiespeichers 10 durch eine eigene Lichtbogen-Sicherung 18 abgesichert, die im Auslösefall die entsprechende Lage von den anderen Lagen elektrisch trennt. Die Lichtbogen-Sicherung 18 ist jedoch räumlich getrennt von der Lage 28 in der Schützbox 30 angeordnet. Auch hier sind die Batteriemodule 12 jeder Lage 28 in Reihe geschaltet und mit der Stromleitung 36 mit der zugeordneten Lichtbogen-Sicherung 18 elektrisch verbunden und im Auslösefall der Lichtbogen-Sicherung 18 elektrisch getrennt von den Batteriemodulen 12 der anderen Lagen 28.

Bei der Ausführungsform gemäß Figur 4 ist die Schützbox 30 mit einem eigenem Gehäuse 31 außenseitig am Gehäuse 32 des Energiespeichers 30 angeordnet. Vorteilhaft kann für unterschiedliche Bestückungen des Energiespeichers (d.h. je nach Anzahl der Batteriemodule und je nach Spannungsniveau der Speicherzellen) schnell räumlich getrennt hiervon die geeignete Ausführung und Anzahl an Lichtbogen-Sicherungen 18 angeordnet werden. Bei der Ausführungsform kann z. B. die Lichtbogen-Sicherung als MOSFET-Sicherung ausgebildet sein. Eine Ausbildung als Schmelzsicherung ist jedoch auch möglich. Alternativ zur Anordnung in der Schützbox ist es möglich, dass mindestens ein Batteriemodul pro Lage die Lichtbogen-Sicherungen aufweist.

Die Figur 5 zeigt ein Kraftfahrzeug 1. Das Kraftfahrzeug 1 ist vorzugsweise als ein Nutzfahrzeug, z. B. ein Lastkraftwagen oder ein Omnibus, ausgeführt. Beispielsweise kann der Lastkraftwagen einen (z. B. Lade-) Aufbau aufweisen oder als ein Sattelzugfahrzeug, wie in Figur 4 dargestellt ist, ausgeführt sein. Das Kraftfahrzeug 1 umfasst einen elektrischen Energiespeicher 10, wie in den Figuren 1 bis 4 beschrieben.

Es versteht sich, dass die unter Bezugnahme auf die Figur 5 beschriebenen Techniken und Merkmale mit den Techniken und Merkmalen, die unter Bezugnahme auf die Figuren 1 bis 4 beschrieben sind, kombinierbar sind, einzeln oder in jeglicher Kombination.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen offenbart, wobei die Lichtbogen-Sicherung bei einer gegebenen Stromhöhe eine Auslösezeit aufweist, die schneller ist als die Auslösezeit der Speicherzellen-Sicherung und die langsamer ist als die Auslösezeit der Energiespeicher-Sicherung.

### Bezugszeichenliste

- 1: Kraftfahrzeug, z. B. Nutzfahrzeug
- 2: Fahrzeugrahmen
- 10: Elektrischer Energiespeicher
- 12: Batteriemodul
- 13: Zellmanagement-Controller
- 14: Speicherzelle
- 16: Speicherzellen-Sicherung
- 18: Lichtbogen-Sicherung
- 20: Energiespeicher-Sicherung
- 22: Auslösezeit
- 24: Stromstärke
- 26: Auslösekennlinie Lichtbogen-Sicherung
- 28: Lagen
- 30: Schützbox
- 31: Schützboxgehäuse
- 32: Gehäuse
- 34: Batterie-Management-Controller
- 36: Stromleitung
- 38: Anschlüsse HV-Bordnetz
- 40: Schütz
- 42: Schenkel
- 44: Sollbruchstelle (Sollschmelzstelle)
- 46: Auslöse-Kennlinie Speicherzellen-Sicherung
- 48: Auslöse-Kennlinie Energiespeicher-Sicherung
- 50: Typischer Lichtbogenbereich
- 52: Signalleitung
- 54: Wärme-Hotspot

## Patentansprüche

1. Elektrischer Energiespeicher (10) für ein elektrisch antreibbares Kraftfahrzeug (1), aufweisend:
mindestens ein Batteriemodul (12), vorzugsweise Batteriezellstapelmodul, das mehrere in Reihe geschaltete Speicherzellen (14) umfasst, wobei in die Speicherzellen (14) jeweils eine Speicherzellen-Sicherung (16) integriert ist;
mindestens eine Lichtbogen-Sicherung (18) zur Reduzierung einer Lichtbogenbildung innerhalb des mindestens einen Batteriemoduls (12) beim thermischen Durchgehen einer Speicherzelle (14); und
eine Energiespeicher-Sicherung (20) zum Schutz des Energiespeichers (10) vor fahrzeugseitigen Kurzschlüssen;
wobei die Lichtbogen-Sicherung (18) bei einer gegebenen Stromhöhe eine Auslösezeit aufweist, die schneller ist als die Auslösezeit der Speicherzellen-Sicherung (16) und die langsamer ist als die Auslösezeit der Energiespeicher-Sicherung (20).

2. Elektrischer Energiespeicher (10) nach Anspruch 1,
wobei die Auslösezeit (22) der Lichtbogen-Sicherung (18)
a) bei einer Stromhöhe (24) im Bereich von 1.200A bis 16.000A im Bereich von 0,005 bis 0,5 Sekunden liegt, und/oder
b) bei einer Stromhöhe (24) von 10000A kleiner ist als 0,02 Sekunden, weiter vorzugsweise kleiner ist als 0,01 Sekunden.

3. Elektrischer Energiespeicher (10) nach einem der vorherigen Ansprüche,
wobei die Lichtbogen-Sicherung (18) dazu ausgebildet ist, bei Auftreten einer aus einer thermisch durchgehenden Speicherzelle (14) austretenden Entgasungs-Emission eine durch die Reihenschaltung der Speicherzellen (14) erzeugte elektrischen Systemspannung zu reduzieren, vorzugsweise durch Trennen einer elektrischen Verbindung zwischen zwei benachbarten Speicherzellen (14).

4. Elektrischer Energiespeicher (10) nach einem der vorherigen Ansprüche,
wobei eine Auslösekennlinie (26) der Lichtbogen-Sicherung (18) derart festgelegt ist, dass Lichtbögen, die beim thermischen Durchgehen einer Speicherzelle (14) auftreten, schneller getrennt werden, als die im Energiespeicher (10) verbleibenden Speicherzellen (14) thermisch durchgehen.

5. Elektrischer Energiespeicher (10) nach einem der vorherigen Ansprüche,
wobei das mindestens eine Batteriemodul (12) mehrere Batteriemodule (12) umfasst und jedes oder nur ein Teil der Batteriemodule (12) mindestens eine Lichtbogen-Sicherung aufweist, die zwischen zwei benachbarten Speicherzellen des Batteriemoduls angeordnet ist.

6. Elektrischer Energiespeicher (10) nach einem der vorherigen Ansprüche,
wobei die Lichtbogen-Sicherung eine Schmelzsicherung ist.

7. Elektrischer Energiespeicher (10) nach einem der Ansprüche 1 bis 5,
wobei die Lichtbogen-Sicherung als eine Halbleiterschalter-Sicherung ausgeführt ist.

8. Elektrischer Energiespeicher (10) nach einem der vorherigen Ansprüche
wobei die Lichtbogen-Sicherung als Zellverbinder zum elektrischen Verbinden benachbarter Speicherzellen ausgebildet ist, der eine Sollbruchstelle aufweist.

9. Elektrischer Energiespeicher (10) nach Anspruch 8,
wobei der Zellverbinder U-förmig ausgebildet ist, aufweisend zwei Schenkel, die jeweils an unterschiedlichen Speicherzellen befestigt sind, und die über mehrere, vorzugsweise drei, die Sollbruchstelle ausbildende Stege verbunden sind.

10. Elektrischer Energiespeicher (10) nach einem der vorherigen Ansprüche,
ferner aufweisend eine Schützbox (30), aufweisend mindestens ein Trennelement (32) und die Energiespeicher-Sicherung (20), um den spannungsführenden Teil des Energiespeichers (10) vom Hochvolt-Bordnetz des Kraftfahrzeugs (1) wahlweise zu trennen.

11. Elektrischer Energiespeicher (10) nach Anspruch 10,
wobei das mindestens eine Batteriemodul (12) mehrere Batteriemodule (12) umfasst, die in mehreren übereinander angeordneten Lagen (28) des Energiespeichers (10) angeordnet sind, wobei pro Lage (28) eine Lichtbogen-Sicherung vorgesehen ist, die in der Schützbox (30) angeordnet ist.

12. Elektrischer Energiespeicher (10) nach Anspruch 11,
wobei die Lichtbogen-Sicherung (18) als MOSFET-Sicherung ausgebildet ist.

13. Elektrischer Energiespeicher (10) nach einem der vorherigen Ansprüche,
wobei die Energiespeicher-Sicherung (20) dazu ausgebildet ist, eine elektrische Verbindung zwischen dem Energiespeicher (10) und dem Kraftfahrzeug (1) im Kurzschlussfall, vorzugsweise bei einem fahrzeugseitigen Kurzschlussfall, zu trennen.

14. Elektrischer Energiespeicher (10) nach einem der vorherigen Ansprüche,
wobei die Energiespeicher-Sicherung (20) als kombinierte Schalt- und Schutzvorrichtung ausgebildet ist, umfassend:
a) eine Kontaktpaarung mit einer Doppelkontaktstelle, bei der zwei Festkontaktstücke mittels einer beweglichen Kontaktbrücke elektrisch leitend verbindbar und wieder trennbar sind; und
b) einen ansteuerbaren elektromechanischen Antrieb, mittels dessen eine Steuerkraft auf die Kontaktbrücke erzeugbar ist, zum wahlweisen Schließen und Öffnen der elektrisch leitenden Verbindung.

15. Kraftfahrzeug (1), vorzugsweise Nutzfahrzeug, aufweisend:
einen elektrischen Energiespeicher (10) nach einem der vorherigen Ansprüche; und optional
einen Fahrzeugrahmen (2), vorzugsweise Leiterrahmen, an dem der elektrische Energiespeicher angebracht ist.
